# EUROPÄISCHE PATENTSCHRIFT

(11) **EP 1 845 131 B1**
(45) Veröffentlichungstag und Bekanntmachung des Hinweises auf die Patenterteilung: **15.10.2008**
(21) Anmeldenummer: 07104725.2
(22) Anmeldetag: 23.03.2007
(51) Int. Cl.: C08L 83/04, C08K 5/5317

(54) **Vernetzbare Massen auf der Basis von Organosiliciumverbindungen**
Crosslinkable compositions based on organosilicon compounds
Compositions réticulables à base de composés organo-silicium

(30) Priorität: 10.04.2006 DE 102006016753
(43) Veröffentlichungstag der Anmeldung: 17.10.2007
(73) Patentinhaber: Wacker Chemie AG, 81737 München (DE)
(72) Erfinder: Sixt, Torsten, 84561, Mehring-Öd (DE); Neuhauser, Franz, 5132, Geretsberg (AT)
(74) Vertreter: Budczinski, Angelika

(56) Entgegenhaltungen:
- EP-A1- 1 263 065
- EP-A1- 1 479 720
- EP-A2- 0 761 759
- DE-A1- 19 735 813

## Beschreibung

Die Erfindung betrifft vernetzbare Massen auf der Basis von Organosiliciumverbindungen, deren Herstellung sowie deren Verwendung.

Additionsvernetzende Massen vernetzen durch Anlagerung von Si-gebundenem Wasserstoff an aliphatische Kohlenstoff-Kohlenstoff-Mehrfachbindung (Hydrosilylierung) in Gegenwart eines Katalysators, typischerweise einer Platin-Verbindung. Nach Vermischen der Komponenten wird zwar eine gebrauchsfertige Masse erhalten, doch weist diese häufig nur eine eng begrenzte Topfzeit (=Verarbeitungszeit) auf, da die Vernetzungsreaktion bereits einsetzt. Dies macht eine sich rasch anschließende Verarbeitung erforderlich. Es hat deshalb nicht an Versuchen gefehlt, um mit sogenannten Inhibitoren ein vorzeitiges Einsetzen der Vernetzungsreaktion, die normalerweise auch bei Raumtemperatur abläuft, zu unterbinden. Hierzu sei beispielsweise auf US-A 3,445,420 verwiesen, in der die Verwendung von vinylreichen Siloxanen oder α-Hydroxyacetylen als Inhibitoren beschrieben werden. Diese Inhibitoren inhibieren gleichermaßen die Wasserstoffabspaltung durch Kondensation als auch die Vernetzung via Hydrosilylierung.

Phosphor(-III-)Verbindungen, wie Phosphite oder Trialkylphosphine, sind generell sehr starke Inhibitoren, die normalerweise Platin so stark inhibieren, dass der Vernetzungs- und Wasserstoffentwicklungsprozess gänzlich ausbleibt oder das Material nicht vollständig vernetzt und klebrig bleibt. In der Patentliteratur ist die Verwendung von P(III)-Verbindungen schon lange bekannt. Trialkyl oder -arylphosphine wurden als Inhibitoren in Substanz oder in Form von z.B Tetrakisphosphin-Platinkomplexen und auch in Mischungen mit Platin-Vinyl-Komplexen (z.B. US-A 4,851,452) als Katalysator/Inhibitorsystem vorgeschlagen; zur Herstellung von schnell schäumenden Siliconzubereitungen mit besonders niedriger Dichte wurden ähnliche Lösungsansätze verfolgt. Hierzu sei beispielsweise auf US-A 4,851,452 und US-A 4,840,974 verwiesen. In US-A 4,329,275 werden Systeme aus Phosphor (III) beschrieben, welche durch die Zugabe von Peroxid unter Hitzeeinwirkung das Phosphit zum Phosphat oxidieren, dieses dann mangels freier Elektronenpaare nicht mehr als sigma-Donor wirken kann und folglich nicht mehr inhibierend wirkt. Dies hat natürlich die Einschränkung auf hitzehärtende Systeme zur Folge, die rasch vulkanisieren und dabei wieder eng überlagerte Kinetiken von Wasserstoffbildung und Vernetzung aufweisen. Bei anderen hitzehärtenden Systemen werden Trialkyl- oder Triarylphosphite eingesetzt. Hierzu sei beispielsweise auf EP-A 0761759 und WO98/29497 verwiesen, wobei hier die Vernetzung der mono- oder polydentalen Phosphitliganden nur durch Hitzeeinfluss ausgesetzt werden kann.

Gegenstand der Erfindung sind durch Anlagerung von Si-gebundenem Wasserstoffatom an aliphatische Mehrfachbindung vernetzbare Massen enthaltend mindestens eine Verbindung der Formel

R³P(O)(OH)₂ (III)

und/oder deren Derivate,
wobei R³ die Bedeutung von gegebenenfalls substituiertem Kohlenwasserstoffrest, der mit Heteroatomen unterbrochen sein kann, hat.

Bei den erfindungsgemäßen Massen kann es sich um beliebige, bisher bekannte durch Anlagerung von Si-gebundenem Wasserstoffatom an aliphatische Mehrfachbindung vernetzbare Massen handeln, wie beispielsweise einkomponentige, bei erhöhter Temperatur vulkanisierende oder zweikomponentige bei Raumtemperatur vulkanisierbare Organopolysiloxanmassen. Die vernetzbaren Massen können dabei frei von Füllstoffen sein, können aber auch aktive oder nicht aktive Füllstoffe enthalten.

Bei den erfindungsgemäßen Massen kann es sich auch um selbstschäumende Massen handeln, d.h. additionsvernetzende Zubereitungen, die unter Kondensationsreaktion von protischen Komponenten, wie z.B. Wasser, Alkoholen oder OH-Gruppen enthaltende Polymere, mit Si-gebundene Wasserstoffatome aufweisenden Komponenten Wasserstoff abspalten.

Art und Menge der üblicherweise in solchen Massen verwendeten Komponenten sind bereits bekannt.

Bevorzugt handelt es sich bei den vernetzbaren Massen um solche enthaltend
(A) Verbindungen, die Reste mit aliphatischen Kohlenstoff-Kohlenstoff-Mehrfachbindungen aufweisen,
(B) Organosiliciumverbindungen mit Si-gebundenen Wasserstoffatomen, oder anstelle von (A) und (B)
(AB) Organosiliciumverbindungen, die SiC-gebundene Reste mit aliphatischen Kohlenstoff-Kohlenstoff-Mehrfachbindungen und Si-gebundene Wasserstoffatome aufweisen,
(C) Verbindung der Formel (III) und/oder deren Derivate sowie
(D) die Anlagerung von Si-gebundenem Wasserstoffatom an aliphatische Mehrfachbindung fördernden Katalysator.

Die in den erfindungsgemäßen Massen eingesetzten Verbindungen (A) und (B) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome oder Verbindung (A) weist mindestens drei aliphatisch ungesättigte Reste auf und Siloxan (B) mindestens zwei Si-gebundene Wasserstoffatome.

Vorzugsweise handelt es sich bei erfindungsgemäß eingesetzter Komponente (A) um aliphatisch ungesättigte Organosiliciumverbindungen, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹_{b}SiO_{(4-a-b)/2} (I)

eingesetzt, wobei
R gleich oder verschieden sein kann und einen von aliphatischen Kohlenstoff-Kohlenstoff-Mehrfachbindungen freien Rest bedeutet, R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist,
mit der Maßgabe, dass die Summe a+b kleiner oder gleich 3 ist und im Durchschnitt mindestens 2 Reste R¹ je Molekül vorliegen.

Bei Rest R kann es sich um ein- oder mehrwertige Reste handeln,
wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfasst die einwertigen Reste -F, -Cl, -Br, Organyloxyreste und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste.

Falls es sich bei Rest R um SiC-gebundene, substituierte Kohlenwasserstoffreste handelt, sind als Substituenten Halogenatome, phosphorhaltige Reste, Cyanoreste, Organyloxyreste und Aminoreste bevorzugt.

Beispiele für Reste R sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, Arylreste, wie Phenylreste, o-,m-,p-Tolylreste, Xylylreste und Ethylphenylreste, Aralkylreste, wie der Benzylrest und der α- und β-Phenylethylrest.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und Organyloxyreste bevorzugt.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt sind.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel) . Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein

Besonders bevorzugt als Komponente (A) ist die Verwendung vinylfunktioneller, im wesentlichen linearer Polydiorganosiloxane mit einer Viskosität von 0,6 bis 500 000 000 mm²/s, besonders bevorzugt von 10 bis 50 000 000 mm²/s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind. Selbstverständlich können auch Mischungen unterschiedlicher, den Kriterien des Bestandteils (B) genügende Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten.

Als Organosiliciumverbindungen (B), die Si-gebundene Wasserstoffatome aufweisen, werden vorzugsweise lineare, cyclische oder verzweigte Organopolysiloxane enthaltend Einheiten der Formel

R²_{c}H_{d}SiO_{(4-c-d)/2} (II)

eingesetzt, wobei
R² gleich oder verschieden sein kann und eine oben für Rest R angegebene Bedeutung hat,
c 1, 2 oder 3 ist und
d 1 oder 2 ist,
mit der Maßgabe, dass die Summe von c+d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,01 bis 2 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10**²** und 10**⁶** g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein.

Besonders bevorzugt handelt es sich bei der erfindungsgemäß eingesetzten Komponente (B) um niedermolekulare, SiH-funktionelle Verbindungen, wie 1,1,3,3-Tetramethyldisiloxan, Tetrakis(dimethylsiloxy)silan, 1,1,1,3,5,5,5-Heptamethyltrisiloxan und Tetramethylcyclotetrasiloxan, sowie um höhermolekulare, SiH-haltige Siloxane, wie Poly(hydrogenmethyl)siloxan und Poly(dimethylhydrogenmethyl)siloxan mit einer Viskosität bei 25°C von 1 bis 1 000 000 mm²/s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Massen enthalten, dass das Molverhältnis von SiH-Gruppen zu aliphatisch ungesättigten Gruppen bevorzugt größer 0,1 ist. Handelt es sich bei den vernetzbaren Zubereitungen nicht um selbstschäumende Massen, ist das Molverhältnis von SiH-Gruppen zu aliphatisch ungesättigten Gruppen bevorzugt bei 0,1 bis 20, besonders bevorzugt zwischen 0,8 bis 5,0. Handelt es sich bei den vernetzbaren Zubereitungen um selbstschäumende Massen liegt das Molverhältnis von SiH-Gruppen zu aliphatisch ungesättigten Gruppen bevorzugt zwischen 10 und 250, besonders bevorzugt zwischen 10 und 50.

Falls Organosiliciumverbindungen (AB) eingesetzt werden, handelt es sich vorzugsweise um solche, die je Molekül mindestens 2 Reste R¹ und mindestens 2 Si-gebundene Wasserstoffatome aufweisen.

Die Organosiliciumverbindungen (AB) besitzen vorzugsweise eine Viskosität von 0,01 bis 500 000 Pa·s, besonders bevorzugt 0,1 bis 100 000 Pa·s, jeweils bei 25°C.

Die erfindungsgemäß eingesetzten Komponenten (A) und (B) bzw. (AB) sind handelsübliche Produkte bzw. nach in der Chemie gängigen Verfahren herstellbar.

Beispiele für Rest R³ sind die für R und R¹ angegebenen Beispiele.

Bevorzugt handelt es sich bei Rest R³ um gegebenenfalls mit Chlor- und Alkoxygruppen substituierte Kohlenwasserstoffreste mit 1 bis 14 Kohlenstoffatomen, die mit O und N unterbrochen sein können, besonders bevorzugt um Alkyl- oder Arylreste mit 6 bis 10 Kohlenstoffatomen, insbesondere um den Octylrest.

Beispiele für Komponente (C) sind Alkylphosphonsäuren, wie Aminomethylphosphonsäure, 1-Propylphosphonsäure, 2-Chlorethylphosphonsäure, 1-Octylphosphonsäure und 1-Decylphosphonsäure, Arylphosphonsäuren, wie 1-Naphthylphosphonsäure, 1-Naphthylmethylphosphonsäure, Phenylphosphonsäure, Methoxyphenylphosphonsäure, Methylbenzylphosphonsäure und Benzylphosphonsäure, sowie deren Derivate, wie Anhydride, Säurechloride und Ester.

Bei Komponente (C) handelt es sich bevorzugt um Alkylphosphonsäuren und besonders bevorzugt um Octylphosphonsäure.

Die erfindungsgemäßen Massen enthalten Bestandteil (C) in Mengen von bevorzugt 0,01 bis 10 Gewichtsteilen, besonders bevorzugt von 0,05 bis 5 Gewichtsteilen, insbesondere bevorzugt 0,05 bis 1 Gewichtsteilen, jeweils bezogen auf 100 Gewichtsteile Bestandteil (A).

Bei der erfindungsgemäß eingesetzten Komponente (C) handelt es sich um handelsübliche Produkte bzw. sind nach in der organischen Chemie gängigen Verfahren herstellbar.

Als erfindungsgemäß eingesetzte Komponente (D) können alle Katalysatoren verwendet werden, die auch bisher in durch Anlagerung von Si-gebundenem Wasserstoff an aliphatische Mehrfachbindung vernetzbaren Massen eingesetzt worden sind.

Bevorzugt handelt es sich bei Komponente (D) um Hydrosilylierungskatalysatoren aus der Gruppe 8, 9 oder 10 im Periodensystem. Hierbei können Metalle und deren Verbindungen, wie Platin, Rhodium, Palladium, Eisen, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden als Hydrosilylierungskatalysatoren (D) Platin und Platinverbindungen verwendet, wobei es sich besonders bevorzugt um solche Platinverbindungen handelt, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, wie z.B. (Ph₃P)₂PtCl₂. Besonders bevorzugt als Komponente (D) sind Komplexe des Platins mit Vinylsiloxanen, wie sym-Divinyltetramethyldisiloxan.

Die Menge des erfindungsgemäß eingesetzten Hydrosilylierungskatalysators (D) richtet sich nach der gewünschten Vernetzungsgeschwindigkeit und der jeweiligen Verwendung sowie ökonomischen Gesichtspunkten. Die erfindungsgemäßen Massen enthalten Platin-katalysatoren (D) vorzugsweise in solchen Mengen, dass ein Platingehalt von 0,05 bis 500 Gewichts-ppm (= Gewichtsteile je Million Gewichtsteile), besonders bevorzugt 0,5 bis 200 Gewichts-ppm, insbesondere 5 bis 100 Gewichts-ppm, jeweils bezogen auf das Gesamtgewicht der erfindungsgemäßen Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g, bevorzugt 50 bis 500 m²/g, besonders bevorzugt 150 bis 300 m²/g, sowie Ruße und Aktivkohlen, wie Furnace-Ruß und Acetylen-Ruß, wobei pyrogene und gefällte Kieselsäuren mit BET-Oberflächen von mindestens 50 m²/g bevorzugt sind. Die Kieselsäuren können gegebenenfalls auch als Mischoxide oder O-xidgemische mit den Oxiden der Metalle Aluminium, Magnesium, Calcium, Barium, Zink, Zirkon und/oder Titan vorliegen. Weiter können als Komponente (E) Füllstoffe, wie Quarzmehl, Diatomeenerde, Silikate, Zeolithe, Metalloxide, wie Eisenoxid, Zinkoxid, Titandioxid, Aluminiumoxid, Metallcarbonate, wie Calciumcarbonat, Magnesiumcarbonat, Zinkcarbonat, Metallsulfate, Glimmer, Siloxanharze, Tone, behandelten oder unbehandelten Graphit und Kreiden verwendet werden.

Die genannten Füllstoffe können hydrophilen Charakter haben oder nach bekannten Verfahren oberflächenbehandelt bzw. hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäße Masse kann, falls erwünscht, als Bestandteil (F) weitere Zusätze bis zu einem Anteil von 0 bis 96 Gew.-%, vorzugsweise 0,0001 bis 40 Gew.-%, enthalten. Diese Zusätze können z.B. inaktive Füllstoffe, harzartige Polyorganosiloxane, die von den Organosiliciumverbindungen (A), (B) und (AB) verschieden sind, Dispergierhilfsmittel, Rheologieadditive, apolare Lösungsmittel, polar protische Komponenten, Haftvermittler, Pigmente, Farbstoffe, Weichmacher, organische Polymere, Hitzestabilisatoren, Füllstoffe für Wärmeleitfähigkeit usw. sein. Hierzu zählen Zusätze, wie Nitride, wie Metallnitride und Bornitrid, Carbide, wie Borcarbid und Siliciumcarbid, Metallstäube, Kunststoffpulver, Farbstoffe und Pigmente. Des Weiteren kann es sich um unter Gasentwicklung sich zersetzende Salze, wie Diazoverbindungen, Alkali-, Ammonium- und Erdalkalicarbonate oder Alkali-, Ammonium- und Erdalkalihydrogencarbonate handeln.

Beispiele für nicht verstärkende Füllstoffe, also Füllstoffe mit einer spezifischen Oberfläche nach BET von weniger als 50 m²/g, die als Komponente (F) eingesetzt werden können, sind synthetische Silikate, natürliche Silikate, Quarzmehl, Diatomeenerde, Calciumsilikat, Zirkoniumsilikat, Zeolithe, Metalloxide, wie Eisenoxid, Zinkoxid, Titandioxid, Aluminiumoxid, Metallcarbonate, wie Calciumcarbonat, Magnesiumcarbonat, Zinkcarbonat, Metallsulfate, Glimmer, Tone, Lithophone, Ruße, behandelten oder unbehandelten Graphit und Kreide, wobei die genannten inaktiven Füllstoffe hydrophobiert sein können. Glasfasern und Glasfasererzeugnisse, wie Matten, Stränge, Gewebe, Gelege und dergleichen sowie Mikroglaskugeln können ebenfalls als inaktive Füllstoffe (F) verwendet werden, was jedoch bei der Herstellung von erfindungsgemäßen Schäumen nicht bevorzugt ist.

Des Weiteren können die erfindungsgemäßen Massen polar protische Komponenten (F) enthalten, also Protonendonoren, wie beispielsweise Alkohole, Silanole oder hydroxyfunktionelle Polymere, wie z.B. α,ω-Dihydroxypolydiorganylsiloxane oder Silanolgruppen enthaltende Harze, die verschieden sind zu Komponenten (A), (B) und (AB), oder Wasser, wobei letzteres in Form von Öl-Emulsionen, gebunden oder adsorbiert in Füllstoffen, wie gefällter Kieselsäure, Zeolith oder auch gebunden als Kristallwasser in anorganischen Salzen, wie beispielsweise Ammonium-, Alkali- oder Erdalkaliphosphate in deren verschiedenen Protonierungsstufen vorliegen kann.

Beispiele für die gegebenenfalls eingesetzten polar protischen Komponenten (F) sind Wasser, Alkohole, wie Methanol, Ethanol, n-Propanol, Isopropanol und n-Butanol, Silanole der Formel R' SiOH mit R' gleich einer für R und R¹ angegebenen Bedeutung, wie beispielsweise Trimethylsilanol und Triethylsilanol, sowie Hydroxylgruppen aufweisende Siloxane, die analog Komponente (A) aus Einheiten der Formel (I) aufgebaut sein können, wie α,ω-Dihydroxypolydimethylsiloxane, wobei Wasser, Ethanol, n-Propanol und Isopropanol bevorzugt sind.

Falls es sich bei den erfindungsgemäßen Zubereitungen um selbstschäumende Massen handelt, ist die Verwendung von polar protischer Komponente (F) bevorzugt, wobei sich die einzusetzende Menge nach den gewünschten Schaumeigenschaften sowie der durch die anderen Komponenten bereits eingebrachte Konzentration an Protonendonoren richtet.

Falls polar protische Komponenten (F) eingesetzt werden, handelt es sich um bevorzugt solche Mengen, dass das Molverhältnis von SiH-Gruppen zu OH-Gruppen bzw. Protonendonoren in der Masse bevorzugt bei 0,1 bis 500, besonders bevorzugt bei 1 bis 20,0, liegt.

Enthalten sein können des Weiteren Zusätze (G), die der weiteren gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R**₂**vinylSiO**_{1/2}**-Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Die erfindungsgemäßen Massen enthalten außer den Komponenten (A) bis (G) bevorzugt keine weiteren Bestandteile.

Bevorzugt handelt es sich bei den erfindungsgemäßen Massen um solche, die
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen, oder anstelle von (A) und (B)
(AB) Organosiliciumverbindungen, die SiC-gebundene Reste mit aliphatischen Kohlenstoff-Kohlenstoff-Mehrfachbindungen und Si-gebundene Wasserstoffatome aufweisen,
(C) Alkylphosphonsäure,
(D) die Anlagerung von Si-gebundenem Wasserstoff an aliphatische Mehrfachbindung fördernden Katalysator,
   gegebenenfalls
(E) verstärkende Füllstoffe
   und gegebenenfalls
(F) weitere Bestandteile
   und gegebenenfalls
(G) weitere Stoffe
enthalten.

Besonders bevorzugt handelt es sich bei den erfindungsgemäßen Massen um solche, die aus
(A) im Wesentlichen linearen Verbindungen, die im Mittel mindestens zwei Reste mit aliphatischen Kohlenstoff-Kohlenstoff-Mehrfachbindungen aufweisen,
(B) Organopolysiloxanen mit im Mittel mindestens zwei Si-gebundenen Wasserstoffatomen, oder anstelle von (A) und (B) (AB) Organosiliciumverbindungen, die SiC-gebundene Reste mit aliphatischen Kohlenstoff-Kohlenstoff-Mehrfachbindungen und Si-gebundene Wasserstoffatome aufweisen,
(C) Alkylphosphonsäuren in Mengen von 0,01 bis 10 Gewichtsteilen, bezogen auf 100 Gewichtsteile Bestandteil (A),
(D) die Anlagerung von Si-gebundenem Wasserstoff an aliphatische Mehrfachbindung fördernden Katalysatoren,
(E) verstärkenden Füllstoffen,
(F) weiteren Bestandteilen,
   und gegebenenfalls
(G) weiteren Stoffen
bestehen.

Bei den erfindungsgemäßen Massen handelt es sich insbesondere um selbstschäumende Massen, d.h. unter Kondensationsreaktion von protischen Komponenten, wie Wasser, Alkoholen, Silanol oder hydroxyfunktionellen Polymeren mit dem Vernetzer (B) Wasserstoff abspaltende, additionsvernetzende Zubereitungen.

Die erfindungsgemäßen Massen können, falls erwünscht, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, oder auch geschmeidige, hochviskose Massen darstellen, wie dies bekanntermaßen bei den in Fachkreisen häufig als RTV-1, RTV-2, LSR und HTV bezeichneten Massen der Fall sein kann.

Die Herstellung der erfindungsgemäßen Massen kann nach bekannten Verfahren erfolgen, wie beispielsweise durch gleichmäßiges Vermischen der einzelnen Komponenten. Die Vermischung erfolgt dabei vorzugsweise abhängig von der Viskosität von (A), z.B. mit einem Rührer, in einem Dissolver, auf einer Walze oder in einem Kneter.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen, durch Anlagern von Si-gebundenem Wasserstoff an aliphatische Mehrfachbindungen, vernetzbaren Massen können unter den gleichen Bedingungen vernetzen gelassen werden wie die bisher bekannten, durch Hydrosilylierungsreaktion vernetzbaren Massen. Vorzugsweise handelt es sich dabei um Temperaturen von 0 bis 220°C, besonders bevorzugt von 10 bis 80°C, und einem Druck der umgebenden Atmosphäre, also etwa von 900 bis 1100 hPa. Es können aber auch höhere oder niedrigere Temperaturen und Drücke angewendet werden. Die Vernetzung kann auch photochemisch mit energiereicher Strahlung, wie z.B. sichtbarem Licht mit kurzen Wellenlängen und UV-Licht, oder mit einer Kombination aus thermischer und photochemischer Anregung durchgeführt werden.

Ein weiterer Gegenstand der vorliegenden Erfindung sind Formkörper, wie Folien und Laminate, hergestellt durch Vernetzung der erfindungsgemäßen Massen.

Die elastomeren Eigenschaften der erfindungsgemäßen Formkörper umfassen gleichfalls das gesamte Spektrum, beginnend bei extrem weichen Silicongelen über gummiartige Materialien bis hin zu hochvernetzten Siliconen mit glasartigem Verhalten.

Die erfindungsgemäßen Formkörper haben eine Dichte von bevorzugt 0,1 bis 5 g/cm³, besonders bevorzugt 0,15 bis 2 g/cm³, jeweils bei 20°C und 1013 hPa.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfasst beispielsweise die Siliconbeschichtung bzw. Imprägnierung beliebiger Substrate, die Herstellung von Formteilen, z.B. im Spritzgussverfahren, Vakuumextrusionsverfahren, Extrusions- und Kalanderverfahren, Formgießen und Formpressen, Abformungen sowie die Verwendung als Dicht-, Einbett- und Vergussmassen.

Die erfindungsgemäßen Massen haben den Vorteil, dass sie einfach in der Herstellung und Handhabung sind.

Der grundsätzliche Vorteil gegenüber anderen Systemen besteht darin, dass speziell bei selbstschäumenden Zubereitungen die Vulkanisatdichte praktisch vollständig unabhängig von der Topfzeit ist. Durch die starke Inhibierungswirkung ist auch die Dichte, Topf- und Aufschäumzeit nicht von der Schichtdicke abhängig. Bei anderen bekannten Systemen kann eine Abhängigkeit von Schäumungszeit und Vulkanisatdichte von der Schichtstärke beobachtet werden.

Ein weiterer großer Vorteil der erfindungsgemäßen Massen ist die Seitendruckfreiheit schäumender Formulierungen. Bei einem Schäumungsvorgang in einer Form oder in einem geschlossenen Behältnis baut sich wegen der gleichzeitigen Vulkanisation und Schäumung ein starker Seitendruck auf, der bei der Entformung eine mehr oder minder ausgeprägte Dimensionsuntreue bewirkt. Daher sind die erfindungsgemäßen selbstschäumenden Mischungen insbesondere für die Herstellung von Formkörpern geeignet.

Ferner haben die erfindungsgemäßen Zusammensetzungen den Vorteil, dass ein weites Spektrum an Topf- und Klebefreiheitszeiten gezielt eingestellt werden und die Vulkanisation thermisch beschleunigt werden kann.

Die erfindungsgemäßen Zusammensetzungen haben darüberhinaus den Vorteil, dass sie eine sehr gute Lagerstabilität aufweisen.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Topfzeit ist üblicherweise definiert als der Zeitraum, innerhalb dem die anwendungsfertig gemischte Masse für den Fachmann noch verarbeitungsfähig ist, also eine Gießmasse gießfähig oder eine selbstschäumende Zubereitung noch nicht zu schäumen beginnt. So wird die Topfzeit bei Siliconen meist mit einer definierten, maximal möglichen Viskositätserhöhung begrenzt, nach deren Überschreitung die Zubereitung nicht mehr uneingeschränkt verarbeitbar ist. Bei Schäumen wird in der Regel die einsetzende Schäumung oder Blasenbildung, sichtbar durch eine Volumenausdehnung, als Ende der Topfzeit definiert.

Die Shore-A-Härte wird nach DIN (Deutsche Industrie Norm) 53505 (Ausgabe August 2000) bestimmt.

Die Klebefreiheit wurde manuell bestimmt.

### Beispiel 1

### Zubereitung der A-Komponente

40 Teile eines Vinyldimethylsiloxy-terminierten Polydimethylsiloxans mit einer Viskosität von 20000 mPa·s bei 25°C, 20 Teile einer pyrogenen Kieselsäure mit einer BET-Oberfläche von 300 m²/g wurden zu einer homogenen Masse verarbeitet. Dieser wurden 25 Teile eines Vinyldimethylsiloxy-terminierten Polydimethylsiloxans mit einer Viskosität von 1000 mPa·s bei 25°C und 15 Teile eines Trimethylsilyl-terminierten Polydimethylpolysiloxans mit einer Viskosität von 50 mPa·s bei 25°C zugegeben. Weiter wurde 1 Teil einer Siliconölemulsion bestehend aus 0,5 Teilen eines Trimethylsilyl-gestopperten Polydimethylsiloxan mit einer Viskosität von 350 mPas bei 23°C und 0,5 Teilen Wasser zugegeben. Anschließend wurden 0,5 Teile einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C eingerührt, zuletzt 0,25 Teile Octylphosphonsäure hinzugegeben und homogen vermischt.

Die Zubereitung der B-Komponente erfolgte durch den Einsatz von 30 Teilen eines Vinyldimethylsiloxy-terminierten Polydimethylsiloxans mit einer Viskosität von 20000 mPa·s bei 25°C, 70 Teilen eines Trimetylsilyl-endfunktionalisierten Polymethyl-Hydrogensiloxans mit einem Gehalt an Si-gebundenem Wasserstoff von 1,7 Gew.-%.

10 Teile der A-Komponente und 1 Teil der B-Komponente wurden in einem Becher zu einer homogenen Masse vermischt und ergaben bei Raumtemperatur ein farb- und geruchloses, teilweise offenzelliges, homogenes und seitendruckfreies Silconschaumvulkanisat mit einer Dichte von 0,25 g/cm³.

Die Topfzeit (TZ) betrug etwa 5 Minuten, die Klebefreiheit trat nach etwa 15 Minuten ein.

Die Shore-A-Härte der erhaltenen Vulkanisate wurde bestimmt.

Die Messergebnisse werden in Tabelle 1 dargestellt.

### Beispiel 2

### Zubereitung der A-Komponente

30 Teile eines Vinyldimethylsiloxy-terminierten Polydimethylsiloxans mit einer Viskosität von 20000 mPa·s bei 25°C, 15 Teile einer pyrogenen Kieselsäure mit einer BET-Oberfläche von 300 m²/g wurden zu einer homogenen Masse verarbeitet. Hinzugefügt wurden 10 Teile eines Quarzmehls mit einer mittleren Partikelgröße von 10 µm und 10 Teile Calciumcarbonat mit einer mittleren Partikelgröße von 50 µm. Dieser wurden 10 Teile eines Trimethylsilyl-terminierten Polydimethylpolysiloxans mit einer Viskosität von 100 mPa·s bei 25°C zugefügt. Weiter wurde 1 Teil einer Siliconölemulsion bestehend aus 0,5 Teilen Trimethylsilyl-gestopperten Polydimethylsiloxan mit einer Viskosität von 350 mPas bei 23°C und 0,5 Teilen Wasser zugegeben. Anschließend wurden 0,2 Teile einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C eingerührt, zuletzt 0,2 Teile Octylphosphonsäure hinzugegeben und homogen vermischt.

10 Teile der so erhaltenen A-Komponente und 1 Teil der B-Komponente, deren Herstellung in Beispiel 1 beschrieben ist, wurden in einem Becher zu einer homogenen Masse vermischt und ergaben bei Raumtemperatur ein elfenbeinfarbenes, geruchloses, teilweise offenzelliges, homogenes und seitendruckfreies Silconschaumvulkanisat mit einer Dichte von 0,35 g/cm³.

Die Topfzeit (TZ), Klebefreiheit und Shore-A-Härte wurden bestimmt.

Die Messergebnisse werden in Tabelle 1 dargestellt.

**Tabelle 1**

| Eigenschaft | Beispiel 1 | Beispiel 2 |
|---|---|---|
| Farbe | farblos | elfenbein |
| Dichte | 0,25 | 0,35 |
| Topfzeit | 3 min | 8 min |
| Klebefreiheit | 15 min | 30 min |
| Abformtreue | sehr gut | sehr gut |
| Härte | 8 Shore A | 12 Shore A |
| Zellstruktur | Teils offenzellig | teils offenzellig |

## Patentansprüche

1. Durch Anlagerung von Si-gebundenem Wasserstoffatom an aliphatische Mehrfachbindung vernetzbare Massen enthaltend mindestens eine Verbindung der Formel
R³P(O)(OH)₂ (III)
und/oder deren Derivate,
wobei R³ die Bedeutung von gegebenenfalls substituiertem Kohlenwasserstoffrest, der mit Heteroatomen unterbrochen sein kann, hat.

2. Vernetzbare Massen gemäß Anspruch 1, **dadurch gekennzeichnet, dass**, es sich um solche handelt enthaltend
(A) Verbindungen, die Reste mit aliphatischen Kohlenstoff-Kohlenstoff-Mehrfachbindungen aufweisen,
(B) Organosiliciumverbindungen mit Si-gebundenen Wasserstoffatomen, oder anstelle von (A) und (B)
(AB) Organosiliciumverbindungen, die SiC-gebundene Reste mit aliphatischen Kohlenstoff-Kohlenstoff-Mehrfachbindungen und Si-gebundene Wasserstoffatome aufweisen,
(C) Verbindung der Formel (III) und/oder deren Derivate sowie
(D) die Anlagerung von Si-gebundenem Wasserstoffatom an aliphatische Mehrfachbindung fördernden Katalysator.

3. Vernetzbare Massen gemäß Anspruch 1 oder 2, **dadurch gekennzeichnet, dass** es sich bei Organosiliciumverbindungen (A) um lineare oder verzweigte Organopolysiloxane aus Einheiten der Formel
RₐR¹_{b}SiO_{(4-a-b)/2} (I)
handelt, wobei
R gleich oder verschieden sein kann und einen von aliphatischen Kohlenstoff-Kohlenstoff-Mehrfachbindungen freien Rest bedeutet,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist,
mit der Maßgabe, dass die Summe a+b kleiner oder gleich 3 ist und im Durchschnitt mindestens 2 Reste R¹ je Molekül vorliegen.

4. Vernetzbare Massen gemäß einem oder mehreren der Ansprüche 2 bis 3, **dadurch gekennzeichnet, dass** es sich bei Organosiliciumverbindungen (B) um lineare, cyclische oder verzweigte Organopolysiloxane enthaltend Einheiten der Formel
R²_{c}H_{d}SiO_{(4-c-d)/2} (II)
handelt, wobei
R² gleich oder verschieden sein kann und eine oben für Rest R angegebene Bedeutung hat,
c 1, 2 oder 3 ist und
d 1 oder 2 ist,
mit der Maßgabe, dass die Summe von c+d kleiner oder gleich 3 ist und im Mittel mindestens zwei Si-gebundene Wasserstoffatome je Molekül vorliegen.

5. Vernetzbare Massen gemäß einem oder mehreren der Ansprüche 2 bis 4, **dadurch gekennzeichnet, dass** es sich bei Komponente (C) um Alkylphosphonsäuren handelt.

6. Vernetzbare Massen gemäß einem oder mehreren der Ansprüche 2 bis 5, **dadurch gekennzeichnet, dass** es sich bei Komponente (C) um Octylphosphonsäure handelt.

7. Vernetzbare Massen gemäß einem oder mehreren der Ansprüche 2 bis 6, **dadurch gekennzeichnet, dass** Komponente (C) in Mengen von 0,01 bis 10 Gewichtsteilen, bezogen auf 100 Gewichtsteile Bestandteil (A), eingesetzt wird.

8. Vernetzbare Massen gemäß einem oder mehreren der Ansprüche 1 bis 7, **dadurch gekennzeichnet, dass** es sich um solche handelt, die
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen, oder anstelle von (A) und (B)
(AB) Organosiliciumverbindungen, die SiC-gebundene Reste mit aliphatischen Kohlenstoff-Kohlenstoff-Mehrfachbindungen und Si-gebundene Wasserstoffatome aufweisen,
(C) Alkylphosphonsäure,
(D) die Anlagerung von Si-gebundenem Wasserstoff an aliphatische Mehrfachbindung fördernden Katalysator,
gegebenenfalls
(E) verstärkende Füllstoffe
und gegebenenfalls
(F) weitere Bestandteile
und gegebenenfalls
(G) weitere Stoffe
enthalten.

9. Formkörper, hergestellt durch Vernetzung der erfindungsgemäßen Massen gemäß einem oder mehreren der Ansprüche 1 bis 8.

10. Formkörper gemäß Anspruch 9, **dadurch gekennzeichnet, dass** sie eine Dichte von 0,1 bis 5 g/cm³ bei 20°C und 1013 hPa haben.

## Claims

1. Substances, crosslinkable by attachment of an Si-bonded hydrogen atom to an aliphatic multiple bond, which comprise at least one compound of the formula
R³P(O)(OH)₂ (III)
and/or the derivatives thereof,
R³ having the meaning of an optionally substituted hydrocarbon radical which can be interrupted by heteroatoms.

2. Crosslinkable substances according to Claim 1, **characterized in that** they are those which comprise
(A) compounds which exhibit radicals with aliphatic carbon-carbon multiple bonds,
(B) organosilicon compounds with Si-bonded hydrogen atoms or, in place of (A) and (B),
(AB) organosilicon compounds which exhibit SiC-bonded radicals with aliphatic carbon-carbon multiple bonds and Si-bonded hydrogen atoms,
(C) compound of the formula (III) and/or the derivatives thereof, and
(D) catalyst which promotes the attachment of an Si-bonded hydrogen atom to an aliphatic multiple bond.

3. Crosslinkable substances according to Claim 1 or 2, **characterized in that** organosilicon compounds (A) are linear or branched organopolysiloxanes formed of units of the formula
RₐR¹_{b}SiO_{(4-a-b)/2} (I)
in which
R can be identical or different and represents a radical free from aliphatic carbon-carbon multiple bonds,
R¹ can be identical or different and represents a monovalent, optionally substituted, SiC-bonded hydrocarbon radical with an aliphatic carbon-carbon multiple bond,
a is 0, 1, 2 or 3 and
b is 0, 1 or 2,
with the proviso that the sum a+b is less than or equal to 3 and, on average, at least 2 radicals R¹ are present per molecule.

4. Crosslinkable substances according to either or both of Claims 2 and 3, **characterized in that** organosilicon compounds (B) are linear, cyclic or branched organopolysiloxanes which comprise units of the formula
R²_{c}H_{d}SiO_{(4-c-d)/2} (II)
in which
R² can be identical or different and has a meaning given above for radical R,
c is 1, 2 or 3 and
d is 1 or 2,
with the proviso that the sum of c+d is less than or equal to 3 and, on average, at least two Si-bonded hydrogen atoms are present per molecule.

5. Crosslinkable substances according to one or more of Claims 2 to 4, **characterized in that** component (C) concerns alkylphosphonic acids.

6. Crosslinkable substances according to one or more of Claims 2 to 5, **characterized in that** component (C) is octylphosphonic acid.

7. Crosslinkable substances according to one or more of Claims 2 to 6, **characterized in that** component (C) is used in amounts of 0.01 to 10 parts by weight, based on 100 parts by weight of constituent (A).

8. Crosslinkable substances according to one or more of Claims 1 to 7, **characterized in that** they are those which comprise
(A) compounds which exhibit radicals with aliphatic carbon-carbon multiple bonds,
(B) organopolysiloxanes with Si-bonded hydrogen atoms or, in place of (A) and (B),
(AB) organosilicon compounds which exhibit SiC-bonded radicals with aliphatic carbon-carbon multiple bonds and Si-bonded hydrogen atoms,
(C) alkylphosphonic acid,
(D) catalyst which promotes the attachment of an Si-bonded hydrogen to an aliphatic multiple bond, optionally
(E) reinforcing fillers
and optionally
(F) additional constituents
and optionally
(G) additional materials.

9. Molded articles, prepared by crosslinking the substances according to the invention according to one or more of Claims 1 to 8.

10. Molded articles according to Claim 9, **characterized in that** they have a density of 0.1 to 5 g/cm³ at 20°C and 1013 hPa.

## Revendications

1. Compositions réticulables par l'addition d'un atome d'hydrogène lié au silicium sur une liaison multiple aliphatique, comprenant au moins un composé de formule :
R³P(O)(OH)₂ (III)
et/ou des dérivés de celui-ci,
dans laquelle R³ représente un radical hydrocarboné éventuellement substitué, qui peut être interrompu par des hétéroatomes.

2. Compositions réticulables selon la revendication 1, **caractérisées en ce qu'**il s'agit de compositions comprenant :
(A) des composés qui renferment des radicaux renfermant des liaisons multiples carbone-carbone aliphatiques,
(B) des composés organosiliciés renfermant des atomes d'hydrogène liés au silicium ou, au lieu de (A) et (B),
(AB) des composés organosiliciés renfermant des radicaux liés à SiC renfermant des liaisons multiples carbone-carbone aliphatiques et des atomes d'hydrogène liés au silicium,
(C) un composé de formule (III) et/ou des dérivés de celui-ci, ainsi que
(D) un catalyseur favorisant l'addition d'un atome d'hydrogène lié au silicium sur une liaison multiple aliphatique.

3. Compositions réticulables selon la revendication 1 ou 2, **caractérisées en ce que** les composés organosiliciés (A) sont des organopolysiloxanes linéaires ou ramifiés composés de motifs de formule :
RₐR¹_{b}SiO_{(4-a-b)/2} (I)
dans laquelle :
R peut être identique ou différent et représente un radical exempt de liaisons multiples carbone-carbone aliphatiques,
R¹ peut être identique ou différent et représente un radical hydrocarboné monovalent, lié à SiC, éventuellement substitué, renfermant une liaison multiple carbone-carbone aliphatique,
a vaut 0, 1, 2 ou 3, et
b vaut 0, 1 ou 2,
à condition que la somme a + b soit inférieure ou égale à 3 et qu'en moyenne au moins 2 radicaux R¹ soient présents par molécule.

4. Compositions réticulables selon l'une ou plusieurs des revendications 2 et 3, **caractérisées en ce que** les composés organosiliciés (B) sont des organopolysiloxanes linéaires, cycliques ou ramifiés, renfermant des motifs de formule :
R²_{c}H_{d}SiO_{(4-c-d)/2} (II)
dans laquelle :
R² peut être identique ou différent et présente une signification indiquée ci-dessus pour le radical R,
c vaut 1, 2 ou 3, et
d vaut 1 ou 2,
à condition que la somme de c + d soit inférieure ou égale à 3 et qu'en moyenne au moins deux atomes d'hydrogène liés au silicium soient présents par molécule.

5. Compositions réticulables selon l'une ou plusieurs des revendications 2 à 4, **caractérisées en ce que** le composant (C) comprend des acides alkylphosphoniques.

6. Compositions réticulables selon l'une ou plusieurs des revendications 2 à 5, **caractérisées en ce que** le composant (C) est l'acide octylphosphonique.

7. Compositions réticulables selon l'une ou plusieurs des revendications 2 à 6, **caractérisées en ce que** le composant (C) est utilisé en quantités de 0,01 à 10 parties en poids, par rapport à 100 parties en poids du constituant (A).

8. Compositions réticulables selon l'une ou plusieurs des revendications 1 à 7, **caractérisées en ce qu'**il s'agit de compositions comprenant :
(A) des composés qui renferment des radicaux renfermant des liaisons multiples carbone-carbone aliphatiques,
(B) des organopolysiloxanes renfermant des atomes d'hydrogène liés au silicium ou, au lieu de (A) et (B),
(AB) des composés organosiliciés renfermant des radicaux liés à SiC renfermant des liaisons multiples carbone-carbone aliphatiques et des atomes d'hydrogène liés au silicium,
(C) de l'acide alkylphosphonique,
(D) un catalyseur favorisant l'addition d'un atome d'hydrogène lié au silicium sur une liaison multiple aliphatique,
éventuellement,
(E) des charges de renforcement,
et, éventuellement,
(F) des constituants supplémentaires,
et, éventuellement,
(G) des substances supplémentaires.

9. Corps moulé produit par la réticulation des compositions selon l'invention, selon l'une ou plusieurs des revendications 1 à 8.

10. Corps moulé selon la revendication 9, **caractérisé en ce qu'**il présente une densité de 0,1 à 5 g/cm³ à 20°C et à 1013 hPa.
